# NEUE EUROPÄISCHE PATENTSCHRIFT

(11) **EP 1 403 623 B2**
(45) Veröffentlichungstag und Bekanntmachung des Hinweises auf die Entscheidung über den Einspruch: **05.06.2013**
(45) Hinweis auf die Patenterteilung: 29.12.2010
(21) Anmeldenummer: 03017161.5
(22) Anmeldetag: 29.07.2003
(51) Int. Cl.: G01D 5/249, G01D 5/347, G01D 5/244

(54) **Verfahren zur Bestimmung einer absoluten Position**
Method for determining an absolute position
Méthode de détection d'une position absolue

(30) Priorität: 25.09.2002 DE 10244547
(43) Veröffentlichungstag der Anmeldung: 31.03.2004
(73) Patentinhaber: Dr. Johannes Heidenhain GmbH, 83292 Traunreut (DE)
(72) Erfinder: Mittmann, Rudolf, 83342 Tacherting (DE)

(56) Entgegenhaltungen:
- EP-A- 0 841 538
- WO-A1-02/01160
- DE-A- 19 506 019
- GB-A- 2 126 444
- US-A- 4 631 519
- US-A- 4 881 059
- US-A- 5 138 560
- US-A- 5 754 568
- US-A- 6 038 523
- 'IEEE Instrumentation& Measurement Magazine', Bd. 1/3, September 1998 vol. E.M. PETRIU: 'Absolute position measurement using pseudo-random binary encoding', Seiten 19 - 23
- 'Electronics Letters', Bd. 29, teil 10 13 Mai 1993 vol. M.ARSICI, D.DENICI: 'New Pseudorandom Code Reading Method Applied to Position Encoders', Seiten 893 - 894
- 'IEEE Trans.', 1989 vol. PETRIU E., BASRAN, J.: 'On the position measurement of automated guided vehicles using pseudorandom encoding', Seiten 799 - 803

## Beschreibung

Die Erfindung betrifft ein Verfahren zur Bestimmung einer absoluten Position gemäß dem Anspruch 1 sowie eine Positionsmesseinrichtung zur Durchführung des Verfahrens.

Auf vielen Gebieten werden zur Bestimmung der Position zweier zueinander bewegter Körper vermehrt absolute Positionsmesseinrichtungen eingesetzt. Absolute Positionsmesseinrichtungen haben gegenüber rein inkremental messenden Systemen den Vorteil, dass in jeder Relativlage auch nach Unterbrechung der Versorgungsenergie sofort eine korrekte Positionsinformation ausgegeben werden kann.

Die absolute Position wird dabei von einem Code verkörpert, der in mehreren parallel zueinander verlaufenden Spuren beispielsweise als Gray-Code angeordnet ist.

Besonders platzsparend ist die Anordnung der Positionsinformation in einer einzigen Codespur mit in Messrichtung hintereinander angeordneten Codeelementen. Die Codeelemente sind dabei in pseudozufälliger Verteilung hintereinander angeordnet, so dass eine bestimmte Anzahl von aufeinanderfolgenden Codeelementen jeweils ein Codemuster bzw. Bitmuster bildet, das die absolute Position als Codewort eindeutig definiert. Bei der Verschiebung der Abtasteinrichtung um ein einziges Codeelement wird bereits ein neues Codemuster gebildet und über den gesamten absolut zu erfassenden Messbereich steht eine Folge von unterschiedlichen Codewörtern zur Verfügung. Ein derartiger sequentieller Code wird als Kettencode oder als Pseudo-Random-Code bezeichnet.

Bei Positionsmesseinrichtungen können beispielsweise durch partielle Verschmutzung des Maßstabs Fehler in der das Codewort bildenden Bitfolge auftreten, die eine fehlerhafte Bestimmung der absoluten Position verursachen.

Es wurden bereits Verfahren zur Erkennung eines derartigen Fehlers vorgeschlagen. In der EP 0 789 226 B1 wird hierzu vorgeschlagen mit einer Abtasteinrichtung gleichzeitig mindestens drei komplette unterschiedliche Codemuster vom Maßstab abzutasten und daraus Codewörter zu bilden. Die Ist-Abstände der Codewörter werden mit den Soll-Abständen verglichen, wodurch aus den gleichzeitig erfassten Codewörtern ein als korrekt erkanntes Codewort zur Bestimmung der momentanen Absolutposition verwendet wird und als fehlerhaft erkannte Codewörter von der weiteren Verarbeitung ausgeschlossen werden.

Durch dieses Verfahren wird die Zuverlässigkeit bzw. Betriebssicherheit einer Positionsmesseinrichtung erhöht. Nachteilig ist aber, dass ein Codewort bereits als fehlerhaft ausgesondert wird, wenn nur ein einziges Bit der Bitfolge fehlerhaft ist. Um eine hohe Zuverlässigkeit und Betriebssicherheit der Positionsmesseinrichtung zu erreichen, müssen viele Codewörter gleichzeitig abgetastet werden.

In der DE 195 06 019 C2 ist ein Verfahren zur Fehlererkennung beschrieben. Dabei wird davon ausgegangen, dass bei einer Positionsänderung das neue Codewort mit einem Codewort des vorhergehenden Messschritts oder des nachfolgenden Messschritts übereinstimmen muss. Nur bei Übereinstimmung des neuen Codewortes mit einem Nachbarcodewort wird dem neuen Codewort eine absolute Position zugeordnet. Offenbart ist auch eine Fehlerroutine zum Bestimmen eines Fehlers. Dabei werden Bits des neuen Codeworts sukzessive invertiert und auf Übereinstimmung mit dem korrespondierenden Bit der Nachbarcodewörter verglichen. Diese Routine wird durchgeführt, bis eine Übereinstimmung des neuen Codeworts mit einem Nachbarcodewort festgestellt wird. Die Bits, welche bis zur Übereinstimmung invertiert werden müssen, werden als fehlerhaft erkannt, wodurch auch fehlerhaft arbeitende Detektorelemente erkannt werden können.

Durch dieses Verfahren ist nur eine Fehlerprüfung möglich.

Gemäß der US 6.038.523 wird bei der Abtastung eines Codemusters außer den Bitzuständen "1" und "0" ein dritter Zustand "undefiniert" erzeugt, der bei dem Vergleich zur Zuordnung einer absoluten Position unberücksichtigt bleibt.

Der Erfindung liegt die Aufgabe zugrunde, ein Verfahren anzugeben, mit dem eine fehlertolerante und trotzdem zuverlässige Bestimmung einer absoluten Position gewährleistet ist.

Diese Aufgabe wird erfindungsgemäß durch die Merkmale des Anspruches 1 gelöst.

Eine Positionsmesseinrichtung zur Durchführung des Verfahrens ist im Anspruch 5 angegeben.

Die mit der Erfindung erzielten Vorteile bestehen darin, dass nicht gesamte fehlerhafte Codewörter ausgeschieden werden müssen. Mit dem Verfahren werden einzelne fehlerhafte Bits in einem Codewort toleriert. Die Wahrscheinlichkeit, dass durch Abtastung eines relativ kleinen Codebereiches eine korrekte Absolutposition detektiert werden kann, ist sehr groß, weshalb gemäß der Erfindung die Betriebssicherheit und Funktionsfähigkeit der Positionsmesseinrichtung erhöht wird.

Vorteilhafte Ausführungen der Erfindung sind in den abhängigen Ansprüchen angegeben.

Die Erfindung wird anhand der Zeichnungen näher erläutert, dabei zeigen:
- Figur 1: eine Positionsmesseinrichtung in schematischer Darstellung;
- Figur 2: das Prinzip einer Fehlerprüfung;
- Figur 3: die Signale zur Fehlerprüfung gemäß Figur 2;
- Figur 4: mögliche Codeworte mit redundanter Abtastung und zugeordnete absolute Positionen;
- Figur 5a: eine Vergleichsroutine ohne fehlerhaft abgetaste- tem Bit;
- Figur 5b: eine Vergleichsroutine mit einem als fehlerhaft kannten Bit;
- Figur 5c: eine Vergleichsroutine mit zwei als fehlerhaft er- kannten Bits;
- Figur 5d: eine Vergleichsroutine mit einer ersten Anordnung von drei als fehlerhaft erkannten Bits;
- Figur 5e: eine Vergleichsroutine mit einer zweiten Anord- nung von drei als fehlerhaft erkannten Bits und
- Figur 5f: eine Vergleichsroutine mit fehlerhaften Bits, die aber nicht als fehlerhaft erkannt wurden.

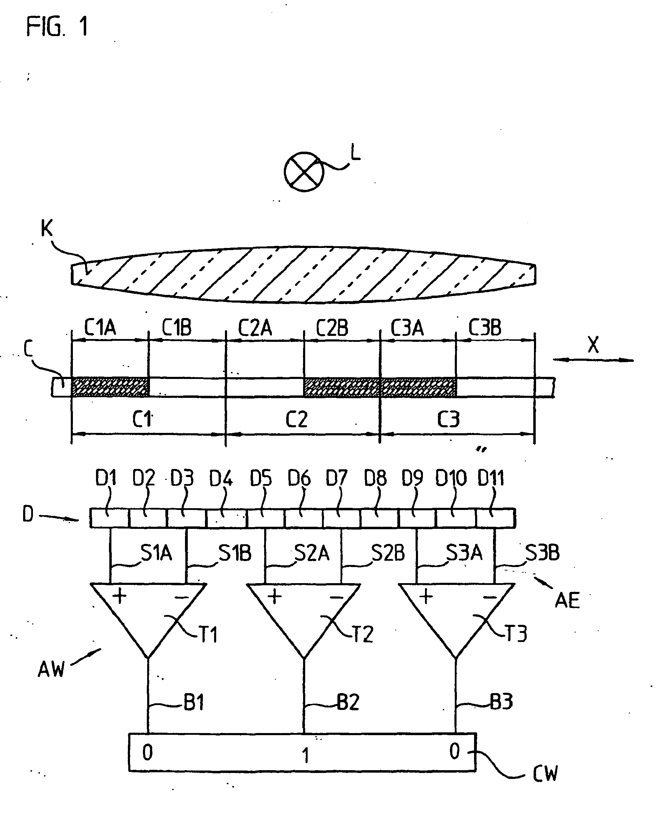

In Figur 1 ist eine Längenmesseinrichtung schematisch dargestellt. Diese Längenmesseinrichtung arbeitet nach dem optischen Abtastprinzip, bei dem ein Code C im Durchlichtverfahren abgetastet wird. Zur Abtastung des Codes C dient eine Abtasteinrichtung AE, die in Messrichtung X relativ zum Code C bewegbar angeordnet ist.

Der Code C besteht aus einer in Messrichtung X hintereinander angeordneten Folge von gleich langen Codeelementen C1, C2, C3. Jedes Codeelement C1, C2, C3 besteht wiederum aus zwei gleich langen in Messrichtung X nebeneinander unmittelbar aufeinanderfolgend angeordneten Teilbereichen A und B, die zueinander komplementär ausgebildet sind. Komplementär bedeutet dabei, dass sie inverse Eigenschaften besitzen, also beim optischen Abtastprinzip transparent und nicht transparent bzw. bei Auflicht-Abtastung reflektierend bzw. nicht reflektierend sind. Ein derartiger Code wird auch als Manchestercode bezeichnet.

Der sequentielle Code C wird von der Abtasteinrichtung AE abgetastet, die eine Lichtquelle L enthält, deren Licht über eine Kollimatorlinse K mehrere aufeinanderfolgende Codeelemente C1, C2, C3 beleuchtet. Das Licht wird von dem Code C positionsabhängig moduliert, so dass hinter dem Code C eine positionsabhängige Lichtverteilung entsteht, die von einer Detektoreinheit D der Abtasteinrichtung AE erfasst wird.

Die Detektoreinheit D ist ein Zeilensensor mit einer in Messrichtung X angeordneten Folge von Detektorelementen D1 bis D11. Jedem Teilbereich A, B der Codeelemente C1, C2, C3 ist in jeder Relativlage zumindest ein Detektorelement D1 bis D11 eindeutig zugeordnet, so dass in jeder Relativlage der Detektoreinheit D gegenüber dem Code C ein Abtastsignal S1A bis S3B aus jedem Teilbereich A, B gewonnen wird. Diese Abtastsignale S1A bis S3B werden einer Auswerteeinrichtung AW zugeführt, welche die beiden Abtastsignale S1A, S1B; S2A, S2B; S3A, S3B der beiden Teilbereiche C1A, C1B; C2A, C2B; C3A, C3B eines Codeelementes C1, C2, C3 jeweils miteinander vergleicht und durch diesen Vergleich für jedes Codeelement C1, C2, C3 einen digitalen Wert bzw. ein Bit B1, B2, B3 erzeugt. Beim Manchestercode C ist der digitale Wert B1 von der Abfolge der Teilbereiche C1A und C1B abhängig. Eine Folge mehrerer digitaler Werte B1, B2, B3 ergibt ein Codewort CW welches die absolute Position definiert. Bei einer Verschiebung der Detektoreinheit D gegenüber dem Code C um die Breite bzw. Länge eines Codeelementes C1, C2, C3 wird ein neues Codewort CW erzeugt und über den absolut zu vermessenden Messbereich wird eine Vielzahl von unterschiedlichen Codewörtern CW gebildet.

Figur 1 zeigt eine Momentanstellung des Codes C relativ zur Abtasteinrichtung AE. Die Detektorelemente D1 bis D11 sind aufeinanderfolgend in einem Abstand mit der halben Breite eines Teilbereiches C1A bis C3B des Codes C angeordnet. Dadurch ist sichergestellt, dass in jeder Position zumindest ein Detektorelement D1 bis D11 einem Teilbereich C1A bis C3B eindeutig zugeordnet ist und nicht einen Übergang zwischen zwei Teilbereichen C1A bis C3B abtastet. In der dargestellten Position wird der Teilbereich C1A vom Detektorelement D1 und der Teilbereich C1 B vom Detektorelement D3 abgetastet. Die Detektorelemente D1, D3 erfassen die Lichtverteilung und erzeugen in Abhängigkeit der Lichtintensität ein analoges Abtastsignal S1A, S1B proportional zur Lichtintensität. Da die beiden Teilbereiche C1A und C1B komplementär zueinander ausgebildet sind, ist auch die Intensität der Abtastsignale S1A und S1B invers zueinander, die Signalpegel sind also weit voneinander beabstandet.

Dieser Signalabstand wird nun zur Erzeugung der binären Information B1 ausgenutzt, indem geprüft wird, welches der beiden Abtastsignale S1A, S1B des Codeelementes C1 größer ist. Diese Prüfung kann durch Quotientenbildung oder durch Differenzbildung erfolgen. Am Beispiel wird die Differenzbildung eingesetzt, wozu gemäß Figur 1 als Vergleichseinrichtung ein Triggerbaustein T1 dient. Der Triggerbaustein T1 erzeugt B1=0, wenn S1A kleiner S1B und B1=1, wenn S1A größer S1B ist. In gleicher Weise werden binäre Informationen B2 und B3 durch Abtastung der Codeelemente C2, C3 und Vergleich der analogen Abtastsignale S2A, S2B; S3A, S3B der Teilbereiche C2A, C2B; C3A, C3B jeweils eines Codeelementes C2, C3 durch Triggerbausteine T2, T3 gewonnen.

Einer ersten Abfolge der komplementär zueinander ausgebildeten Teilbereiche A, B wird also ein erster digitaler Wert und einer zweiten Abfolge der komplementär zueinander ausgebildeten Teilbereichen A, B wird ein zweiter digitaler Wert zugeordnet. Im Beispiel wird der Abfolge opak → transparent der Wert 0 und der Abfolge transparent → opak der Wert 1 zugeordnet.

Da die beiden Teilbereiche A und B jedes Codeelementes C1, C2, C3 zueinander komplementär sind, ist der Störabstand der Abtastsignale S sehr groß. Eine Veränderung der Lichtintensität der Lichtquelle L beeinflusst die Abtastsignale S beider Teilbereiche A und B gleichermaßen.

Aufgrund der komplementären Ausgestaltung jeweils zweier Teilbereiche A, B eines Codeelementes C1, C2, C3 müssen bei korrekter Betriebsweise der Positionsmesseinrichtung durch Abtastung dieser Teilbereich A, B jeweils analoge Abtastsignale S erzeugt werden, deren Differenz einen vorgegebenen Wert übersteigt. Durch Beobachtung dieses Differenzwertes ist eine gute Fehlerprüfung möglich. Die Grundlage dieser Fehlerprüfung ist, dass davon ausgegangen werden kann, dass bei Unterschreiten des Differenzwertes um einen vorgegebenen Betrag die binäre Information B1 unsicher ist und daher zu dieser binären Information B1 ein Fehlersignal F erzeugt wird.

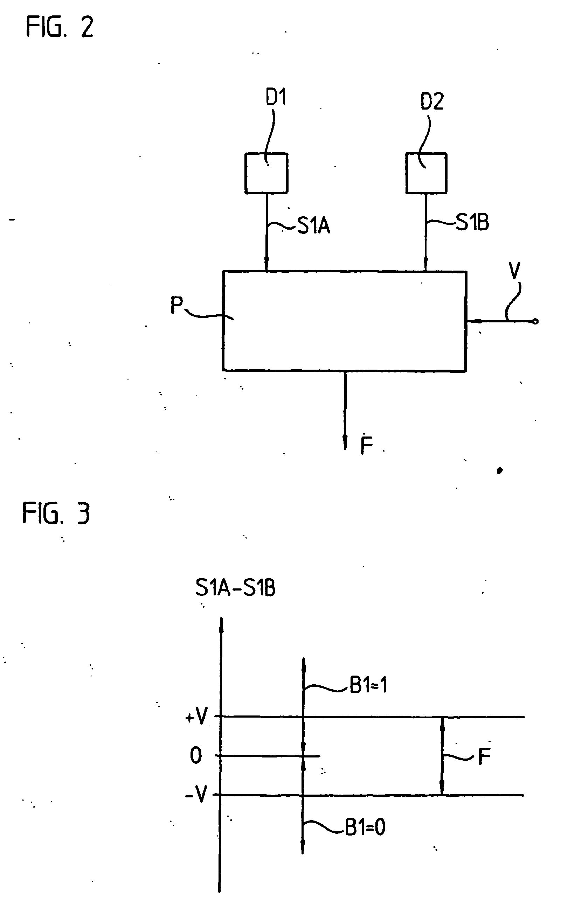

Das Prinzip der Erzeugung des Fehlersignals F ist in Figur 2 anhand des Codeelementes C1 dargestellt. Die analogen Abtastsignale S1A und S1B des Codeelementes C1 werden einer Fehlerprüfeinrichtung P zugeführt. Die Fehlerprüfeinrichtung P vergleicht S1A und S1B durch Differenzbildung (S1A - S1B) und prüft, ob der Differenzbetrag einen vorgegebenen Vergleichswert V übersteigt oder nicht übersteigt. Wenn der Differenzbetrag (S1A - S1B) den vorgegebenen Vergleichswert V nicht übersteigt, wird ein Fehlersignal F ausgegeben. In Figur 3 sind diese Signalverhältnisse dargestellt. Diese Fehlerprüfung wird für die Abtastsignale zur Erzeugung aller Bits B1, B2, B3 eines Codewortes CW durchgeführt.

Durch diese Fehlerprüfung der analogen Abtastsignale S wird die Zuverlässigkeit der erzeugten Bits B1, B2, B3 geprüft. Bei Unterschreiten vorgegebener Kriterien - am Beispiel die Signalamplituden zweier zur Bildung eines Bits B1, B2, B3 verwendeten analogen Abtastsignale S - wird diesem als unzuverlässig erkannten Bit eine Fehlerkennung F zugeordnet.

Die Anordnung der beiden Teilbereiche A und B jedes Codeelementes C1, C2, C3 aufeinanderfolgend direkt nebeneinander in Messrichtung X hat den Vorteil, dass die Detektorelemente D1 bis D11 in einem geringen Abstand in Messrichtung X nebeneinander angeordnet werden können und somit die Positionsmesseinrichtung gegen Verdrehung der Detektoreinheit D gegenüber dem Code C, also gegen Moiré-Schwankungen unempfindlich ist. Weiterhin ist die Störempfindlichkeit gegen Verschmutzungen gering, da davon ausgegangen werden kann, dass beide Teilbereiche A und B eines Codeelementes C1, C2, C3 gleichermaßen beeinflusst werden.

Die Fehlerprüfung kann auch anhand digitaler Abtastsignale jeweils zweier Teilbereiche A, B durchgeführt werden. Ein Fehlersignal wird dann abgegeben, wenn erkannt wird, dass die digitalen Abtastsignale der Teilbereiche A, B eines Codeelementes nicht invers (0 → 1 bzw. 1 → 0) zueinander sind.

Zur Bestimmung der absoluten Position (Decodierung) aus dem abgetasteten Codewort CW sind mehrere Verfahren bekannt. All diesen Verfahren ist gemeinsam, dass eine Reihe von Bitfolgen mit jeweils N Bits vorgegeben wird und jeder dieser Bitfolgen eine absolute Position eindeutig zugeordnet ist. Die vorgegebene Reihe von Bitfolgen entspricht dabei der durch Abtastung des Codes C bei korrekter Betriebsweise erzeugbaren Reihe von Codewörtern CW. Durch Vergleich der N Bits eines abgetasteten Codewortes CW mit jeweils N Bits der vorgegebenen Reihe von Bitfolgen kann somit jedem Codewort CW eine absolute Position eindeutig zugeordnet werden.

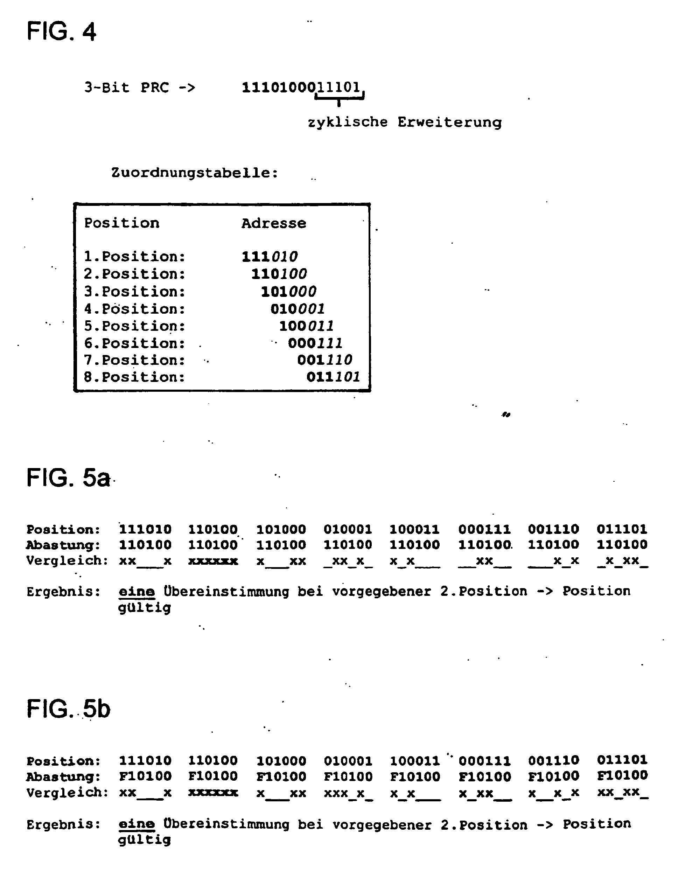

Eine Möglichkeit zur Vorgabe der Bitfolgen ist das Vorsehen eines Speichers mit einer Zuordnungstabelle in Form eines ROM. In dem Speicher ist die Zuordnung Bitfolge zu Position abgelegt. Zur Zuordnung der absoluten Position zu einem abgetasteten Codewort CW, also zur Decodierung, bildet das Codewort CW die Adresse für die Zuordnungstabelle, so dass am Ausgang die dieser Adresse zugeordnete Position ansteht (vgl. Figur 4). Diese Decodierung ist erforderlich, um die Codeworte CW zu standardisieren. Die gebräuchlichste Decodierung ist die Umwandlung in eine Binärcodierung, im Beispiel ist dann CW = 111 → Position 1 = 000; CW = 110 → Position 2 = 001; CW=101 → Position 3 = 010 usw..

Eine weitere Möglichkeit zur Vorgabe der Bitfolge ist die Generierung nach einer vorgegebenen Bildungsvorschrift, wobei der Generierungsschritt die absolute Position eindeutig bestimmt. Dabei wird ausgehend von einer Bitfolge rechnerisch oder mittels logischer Elemente (meist exclusiv - oder - Gatter) die Reihe der Bitfolgen gebildet. Bildungsvorschriften und Schaltungen dazu sind beispielsweise in der Literaturstelle: Digital displacement transducer using pseude-random binary sequences and a microprocessor, by B.E. Jones und K. Zia in Trans Inst M C Vol 3, No 1, Jan-Mar 1981, Seiten 13 bis 20 offenbart, auf die ausdrücklich Bezug genommen wird.

Gemäß der Erfindung wird nun zusätzlich zu einem ein Codewort CW bildendes Codemuster weitere Codeelemente, also ein weiteres Muster, insbesondere zumindest ein Teil eines weiteren Codemusters, abgetastet. Durch das Abtasten dieses weiteren Musters, insbesondere zumindest eines Teils eines weiteren Codemusters, werden zusätzliche Bits gebildet. Die Bits des Codemusters sowie die zusätzlichen Bits werden auf Zuverlässigkeit geprüft, indem beispielsweise die oben erläuterte Überprüfung der Amplituden der analogen Abtastsignale S durchgeführt wird. Verglichen werden nun zusätzlich zu den N Bits des Codewortes CW auch die zusätzlichen Bits mit den korrespondierenden Bits der vorgegebenen Reihe von Bitfolgen. Bei diesem Vergleich werden die als unzuverlässig gekennzeichneten Bits nicht berücksichtigt. Wird bei diesem Vergleich der N Bits sowie der redundanten zusätzlichen Bits mit der gesamten vorgegebenen Reihe von Bitfolgen eine einzige Übereinstimmung der zuverlässigen Bits gefunden, wird dem Vergleichscodewort CW die zu der aufgefundenen Bitfolge abgespeicherte absolute Position zugeordnet. Diese Position ist eindeutig. Werden bei dem Vergleich mehrere Übereinstimmungen aufgefunden, dann sind zu viele Bits unzuverlässig und es sind weitere Fehlerroutinen erforderlich oder es wird eine Fehlermeldung ausgegeben, da an dieser Position keine eindeutige absolute Position bestimmt werden kann.

Eine weitere Fehlerroutine besteht beispielsweise darin, dass davon ausgegangen wird, dass die Änderung zwischen der aktuellen Position und der letzten Position nur einen vorgegebenen Wert betragen kann. Werden nun beim Vergleich mehrere Übereinstimmungen gefunden, wird die Position von den mehreren Positionen als gültig erklärt, dessen Abstand von der letzten Position den vorgegebenen Betrag nicht übersteigt oder der am nächsten an der zuletzt bestimmten Position liegt.

Es ist auch möglich, dass bereits der Vergleich auf einen Nachbarbereich der zuletzt bestimmten Position beschränkt wird.

Anhand eines konkreten Beispiels wird mit Hilfe der Figuren 4 und 5a bis 5f die Erfindung noch näher erläutert.

In Figur 4 ist ersichtlich, dass mit einem 3-stelligen Wort maximal 8 verschiedene Codeworte und somit auch acht verschiedene Positionen eindeutig unterscheidbar sind. In der ersten Zeile ist die Bitfolge des seriellen einspurigen und einschrittigen Pseudo-Random-Codes (PRC) aufgetragen. Da alle Möglichkeiten aufgetragen sind, wird diese Reihe auch als Maximallängensequenz bezeichnet.

Unter dieser ersten Zeile sind in Figur 4 die an jeder der 8 verschiedenen Positionen abgetasteten Codewörter dargestellt. Diese Codewörter werden jeweils von den ersten drei Bits gebildet. Als redundante Information wird in diesem Beispiel jeweils das nächste Codewort abgetastet. Diese zusätzlichen Bits sind kursiv dargestellt. Die Maximallängensequenz wird vorteilhafterweise zur Winkelmessung eingesetzt, dabei wird die Maximallängensequenz geschlossen verwendet.

Anhand der Figuren 5a bis 5f wird nun am Beispiel der 2. Position die Vergleicherroutine erläutert, dabei ist ein als unzuverlässig gekennzeichnetes Bit mit F markiert. Diese Bits geben als Vergleichsergebnis immer eine Übereinstimmung. Eine Übereinstimmung von Bits beim Vergleich ist in den Figuren 5a bis 5e mit X markiert.

In Figur 5a ist dargestellt, dass in der Abtastung kein fehlerhaftes Bit enthalten ist, so dass bei einem einzigen Vergleich der 8 Vergleichspositionen eine Übereinstimmung aller Bits auftritt. Diese Position ist somit eindeutig bestimmbar und wird als gültig bewertet.

In Figur 5b ist eines der abgetasteten Bits mit einer Fehlerkennung F markiert. Dieses Bit wird beim Vergleich nicht berücksichtigt, trotzdem ist diese Position eindeutig bestimmbar.

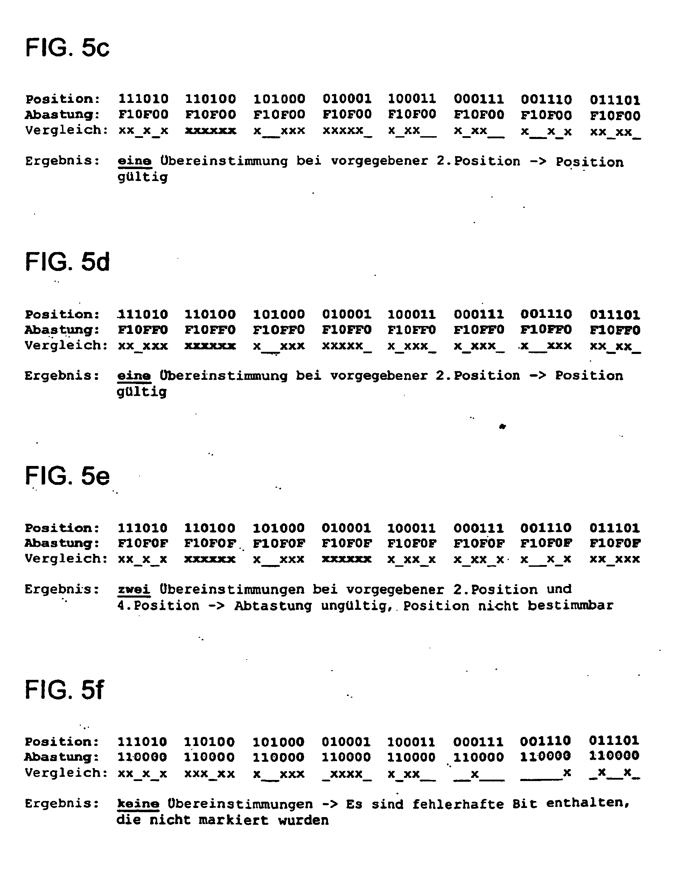

In Figur 5c sind zwei durch Abtastung gewonne Bits mit einer Fehlerkennung F markiert und auch hier ist eine Position eindeutig bestimmbar.

In Figur 5d sind bereits drei Bits als unzuverlässig markiert und trotzdem ist die Position eindeutig bestimmbar.

In Figur 5e sind ebenfalls drei Bits als unzuverlässig markiert, aber an anderer Stelle. In diesem Fall werden beim Vergleich zwei Übereinstimmungen gefunden, so dass die Position nicht eindeutig bestimmbar ist.

In Figur 5f ist ersichtlich, dass kein Bit als unzuverlässig erkannt wurde und dass trotzdem beim Vergleich keine Übereinstimmung gefunden wurde. Das bedeutet, dass zumindest ein fehlerhaftes Bit in der Abtastung enthalten ist, dieses aber von der Fehlerprüfeinrichtung P nicht erkannt wurde. Daraus ist eine unsichere Betriebsweise der Fehlerprüfeinrichtung feststellbar.

Die redundant abgetasteten und zum Vergleich verwendeten Bits sind vorteilhafterweise zum Codewort CW unmittelbar benachbarte Bits, dies ist aber kein Erfordernis. Wichtig ist nur, dass die redundant abgetasteten Bits stellenrichtig mit Bits aus der vorgegebenen Reihe verglichen werden.

Die Erfindung ist besonders vorteilhaft bei einem sequentiellen einschrittigen Manchestercode anwendbar. Die Erfindung ist aber nicht auf diesen Code beschränkt, sie ist auch bei mehrspuriger Codierung einsetzbar.

Die Erfindung ist beim optischen Abtastprinzip besonders vorteilhaft einsetzbar. Die Erfindung ist aber nicht auf dieses Abtastprinzip beschränkt, sondem auch bei magnetischen, induktiven sowie kapazitiven Abtastprinzipien einsetzbar.

Die Positionsmesseinrichtung kann zur Messung von linearen oder rotatorischen Bewegungen eingesetzt werden. Die zu messenden Objekte können dabei der Tisch und der Schlitten einer Werkzeugmaschine, einer Koordinatenmessmaschine oder der Rotor und der Stator eines Elektromotors sein.

## Patentansprüche

1. Verfahren zur Bestimmung einer absoluten Position mit folgenden Verfahrensschritten:
- Abtasten eines Codemusters aus einer Reihe von Codemustern, von denen jedes Codemuster eine absolute Position eindeutig definiert und aus mehreren Codeelementen (C1, C2, C3) besteht, sowie Abtasten zusätzlicher Codeelemente, wobei durch das Abtasten der Codemuster mehrere analoge Abtastsignale (S) erzeugt werden und zur Bildung eines Bits zwei dieser Abtastsignale (S) verwendet werden;
- Bilden eines Codewortes (CW) mit mehreren Bits durch das Abtasten des Codemusters;
- Bilden zusätzlicher Bits durch das Abtasten der zusätzlichen Codeelemente;
- Prüfen der Bits des Codewortes (CW) sowie der zusätzlichen Bits auf Zuverlässigkeit und bei Unterschreiten vorgegebener Kriterien eines der Bits wird diesem eine Fehlerkennung (F) zugeordnet, wobei beim Prüfen auf Zuverlässigkeit eines Bits die Differenz der beiden Abtastsignale (S1A, S1B), aus denen dieses Bit gebildet ist, mit einer Solldifferenz (V) verglichen wird;
- Vorgabe einer Reihe von Bitfolgen, wobei jeweils einer dieser Bitfolgen eine absolute Position eindeutig zugeordnet ist;
- Vergleich der Bits des Codewortes (CW) mit der vorgegebenen Reihe von Bitfolgen und Vergleich der zusätzlichen Bits mit korrespondierenden Bits aus den vorgegebenen Bitfolgen und bei Auftreten einer Übereinstimmung aller Bits Zuordnen dieser entsprechenden absoluten Position zu dem Codewort (CW), wobei beim Vergleich auf Übereinstimmung die mit einer Fehlerkennung (F) versehenen Bits nicht berücksichtigt werden.

2. Verfahren nach Anspruch 1, wobei die zusätzlichen Codeelemente zumindest ein Teil eines weiteren Codemusters aus der Reihe von Codemustem sind.

3. Verfahren nach einem der vorhergehenden Ansprüche, wobei die Vorgabe der Reihe von Bitfolgen und die Zuordnung einer absoluten Position jeder dieser Bitfolgen durch eine abgespeicherte Zuordnungstabelle erfolgt.

4. Verfahren nach einem der vorhergehenden Ansprüche 1 bis 2, wobei die Vorgabe der Reihe von Bitfolgen und die Zuordnung einer absoluten Position jeder dieser Bitfolgen nach einer Bildungsvorschrift erfolgt.

5. Positionsmesseinrichtung zur Durchführung des Verfahrens nach Anspruch1 mit
- Mitteln zum Abtasten eines Codemusters aus einer Reihe von Codemustem, von denen jedes Codemuster eine absolute Position eindeutig definiert und aus mehreren Codeelementen (C1, C2, C3) besteht sowie zum Abtasten zusätzlicher Codeelemente, wobei durch das Abtasten der Codemuster mehrere analoge Abtastsignale (S) erzeugt werden und zur Bildung eines Bits zwei dieser Abtastsignale (S) verwendet werden;
- Mitteln zum Bilden eines Codewortes (CW) mit mehreren Bits durch das Abtasten des Codemusters;
- Mitteln zum Bilden zusätzlicher Bits durch das Abtasten der zusätzlichen Codeelemente;
- Mitteln zum Prüfen der Bits des Codewortes (CW) sowie der zusätzlichen Bits auf Zuverlässigkeit, die dazu ausgelegt sind, bei Unterschreiten vorgegebener Kriterien eines der Bits diesem eine Fehlerkennung (F) zuzuordnen wobei beim Prüfen auf Zuverlässigkeit eines Bits die Differenz der beiden Abtastsignale (S1A, S1B), aus denen dieses Bit gebildet ist, mit einer Solldifferenz (V) verglichen wird;
- Mitteln zur Vorgabe einer Reihe von Bitfolgen, wobei jeweils einer dieser Bitfolgen eine absolute Position eindeutig zugeordnet ist;
- Mitteln zum Vergleich der Bits des Codewortes (CW) mit der vorgegebenen Reihe von Bitfolgen und zum Vergleich der zusätzlichen Bits mit korrespondierenden Bits aus den vorgegebenen Bitfolgen und die bei Auftreten einer Übereinstimmung aller Bits diese entsprechende absolute Position zu dem Codewort (CW) zuordnen, wobei beim Vergleich auf Übereinstimmung die mit einer Fehlerkennung (F) versehenen Bits nicht berücksichtigt werden.

## Claims

1. A method for determining an absolute position comprising the following method steps:
- scanning a code pattern from a series of code patterns, each code pattern of which clearly defines an absolute position and consists of a plurality of code elements (C1, C2, C3), as well as scanning additional code elements, wherein a plurality of analog scanning signals (S) are generated by scanning the code patterns and two of these scanning signals (S) are used to form a bit;
- forming a code word (CW) comprising a plurality of bits by scanning the code pattern;
- forming additional bits by scanning the additional code elements;
- testing the bits of the code word (CW) as well as the additional bits for reliability and, in response to the undershooting of provided criteria of one of the bits, an error detection (F) is allocated to said bit, wherein the difference of the two scanning signals (S1A, S1B) from which said bit is formed is compared to a reference difference (V) in the testing for reliability of a bit;
- providing a series of bit sequences, wherein an absolute position is clearly allocated in each case to one of these bit sequences;
- comparing the bits of the code word (CW) to the provided series of bit sequences and comparing the additional bits to corresponding bits from the provided bit sequences and, in the event that all bits correspond, allocating this corresponding absolute position to the code word (CW), wherein the bits provided with an error detection (F) are not considered in the comparison for consistency.

2. The method according to claim 1, wherein the additional code elements are at least a part of a further code pattern from the series of code patterns.

3. The method according to either of the preceding claims, wherein the provision of the series of bit sequences and the allocation of an absolute position to each of these bit sequences takes place by means of a stored allocation table.

4. The method according to either of the preceding claims 1 and 2, wherein the provision of the series of bit sequences and the allocation of an absolute position to each of these bit sequences takes place according to a formation code.

5. A position measuring device for carrying out the method according to claim 1 comprising
- means for scanning a code pattern from a series of code patterns, each code pattern of which clearly defines an absolute position and consists of a plurality of code elements (C1, C2, C3), as well as for scanning additional code elements, wherein a plurality of analog scanning signals (S) are generated by scanning the code patterns and two of these scanning signals (S) are used to form a bit;
- means for forming a code word (CW) comprising a plurality of bits by scanning the code pattern;
- means for forming additional bits by scanning the additional code elements;
- means for testing the bits of the code word (CW) as well as the additional bits for reliability, which are designed to allocate an error detection (F) to said bit in response to the undershooting of provided criteria of one of the bits, wherein the difference of the two scanning signals (S1A, S1B) from which said bit is formed is compared to a reference difference (V) in the testing for reliability of a bit;
- means for providing a series of bit sequences, wherein an absolute position is clearly allocated in each case to one of these bit sequences;
- means for comparing the bits of the code word (CW) to the provided series of bit sequences and for comparing the additional bits to corresponding bits from the provided bit sequences and, in the event that all bits correspond, allocating this corresponding absolute position to the code word (CW), wherein the bits provided with an error detection (F) are not considered in the comparison for consistency.

## Revendications

1. Procédé pour la détermination d'une position absolue, avec les étapes de procédé suivantes :
- balayage d'un modèle de code dans une série de modèles de code, parmi lesquels chaque modèle de code définit de façon univoque une position absolue et est constitué de plusieurs éléments de code (C1, C2, C3), et balayage d'éléments de code supplémentaires le balayage des modèles de code produisant plusieurs signaux de balayage analogiques (S), et deux de ces signaux de balayage (S) étant utilisés pour la formation d'un bit ;
- formation d'un mot de code (CW) avec plusieurs bits, par le balayage du modèle de code ;
- formation de bits supplémentaires, par le balayage des éléments de code supplémentaires ;
- vérification des bits du mot de code (CW), ainsi que des bits supplémentaires, quant à leur fiabilité, et attribution à ce bit d'une détection d'erreur. (F) lors du dépassement de l'un des bits en-dessous de critères prédéfinis, lors de la vérification de la fiabilité d'un bit, la différence entre les deux signaux de balayage (S1A, S1B) qui forment ce bit étant comparée avec une différence de consigne (V) ;
- indication d'une série de suites de bits, dans laquelle une position absolue est attribuée de façon univoque à chacune de ces suites de bits ;
- comparaison des bits du mot de code (CW) avec la série de suites de bits prédéfinie, et comparaison des bits supplémentaires avec des bits correspondants parmi les suites de bits prédéfinies, et, lors de l'apparition d'une concordance de tous les bits, attribution de cette position absolue correspondante au mot de code (CW), où, lors de la comparaison pour concordance, les bits pourvus d'une détection d'erreur (F) sont ignorés.

2. Procédé selon la revendication 1, dans lequel les éléments de code supplémentaires constituent au moins une partie d'un modèle de code supplémentaire parmi la série de modèles de code.

3. Procédé selon l'une des revendications précédentes, dans lequel l'indication de la série de suites de bits et l'attribution d'une position absolue à chacune de ces suites de bits sont effectuées par un tableau d'attribution enregistré.

4. Procédé selon l'une des revendications précédentes 1 à 2, dans lequel l'indication de la série de suites de bits et l'attribution d'une position absolue à chacune de ces suites de bits sont effectuées selon une consigne de formation.

5. Dispositif de mesure de position pour l'exécution du procédé selon la revendication 1, avec
- des moyens pour le balayage d'un modèle de code d'une série de modèles de code, parmi lesquels chaque modèle de code définit de façon univoque une position absolue et est constitué de plusieurs éléments de code (C1, C2, C3), ainsi que pour le balayage d'éléments de code supplémentaires le balayage des modèles de code produisant plusieurs signaux de balayage analogiques (S), et deux de ces signaux de balayage (S) étant utilisés pour la formation d'un bit ;
- des moyens pour la formation d'un mot de code (CW) avec plusieurs bits, par le balayage du modèle de code ;
- des moyens pour la formation de bits supplémentaires, par le balayage des éléments de code supplémentaires ;
- des moyens pour la vérification des bits du mot de code (CW) ainsi que des bits supplémentaires, quant à leur fiabilité, qui sont conçus pour attribuer une détection d'erreur (F) à ce bit lors du dépassement de l'un des bits en-dessous de critères prédéfinis, lors de la vérification de la fiabilité d'un bit, la différence entre les deux signaux de balayage (S1A, S1B) qui forment ce bit étant comparée avec une différence de consigne (V) ;
- des moyens pour l'indication d'une série de suites de bits, où une position absolue est attribuée de façon univoque à chacune de ces suites de bits ;
- des moyens pour la comparaison des bits du mot de code (CW) avec la série prédéfinie de suites de bits, et pour la comparaison des bits supplémentaires avec des bits correspondants parmi les suites de bits prédéfinis, et qui, lors de l'apparition d'une concordance de tous les bits, attribuent cette position absolue correspondante au mot de code (CW), les bits pourvus d'une détection d'erreur (F) n'étant pas pris en compte dans la comparaison pour concordance.
